# EUROPÄISCHE PATENTSCHRIFT

(11) **EP 1 536 996 B1**
(45) Veröffentlichungstag und Bekanntmachung des Hinweises auf die Patenterteilung: **14.12.2005**
(21) Anmeldenummer: 03750547.6
(22) Anmeldetag: 15.09.2003
(51) Int. Cl.: B60T 10/02

(54) **ANTRIEBSEINHEIT MIT EINEM RETARDER**
DRIVE UNIT COMPRISING A RETARDER
UNITE D'ENTRAINEMENT PRESENTANT UN RALENTISSEUR

(30) Priorität: 13.09.2002 DE 10242736
(43) Veröffentlichungstag der Anmeldung: 08.06.2005
(73) Patentinhaber: Voith Turbo GmbH & Co. KG, 89522 Heidenheim (DE)
(72) Erfinder: VOGELSANG, Klaus, 74564 Crailsheim (DE); HEILINGER, Peter, 74589 Satteldorf (DE)
(74) Vertreter: Dr. Weitzel & Partner
(86) Internationale Anmeldenummer: PCT/EP2003/010250
(87) Internationale Veröffentlichungsnummer: WO 2004/026652

(56) Entgegenhaltungen:
- EP-B- 0 885 351
- WO-A-98/15725
- US-A- 3 924 713

## Beschreibung

Die Erfindung betrifft eine Antriebseinheit, im Einzelnen mit den Merkmalen aus dem Oberbegriff des Anspruchs 1.

In Antriebsanlagen von Fahrzeugen oder stationären Anlagen ist als Mittel zur Geschwindigkeits- bzw. Drehzahlreduzierung häufig ein Retarder integriert. Der Retarder wird beim Einsatz im Kraftfahrzeug oder bei Anlagen mit stark wechselndem Betrieb durch Füllen und Entleeren des beschaufelten Arbeitskreislaufes mit einem Betriebsfluid ein- oder ausgeschaltet.

Die stationären oder fahrbaren Einheiten - beispielsweise Kraftfahrzeuge -, in welchen die genannten Antriebseinheiten eingebaut sind, haben in der Regel weitere Aggregate, die einer Kühlung bedürfen. Hierbei ist beispielsweise an Motoren, Bremsen, Kupplungen, Getriebe zu denken.

Diese anderen Aggregate können ebenfalls einen Kühlkreislauf aufweisen, um deren Arbeitsmedium zu kühlen.

Aus einer Vielzahl von Patenten sind Retarder bekannt geworden, bei denen das Arbeitsmedium des Retarders das Kühlmedium des Fahrzeuges ist. Diesbezüglich wird auf die
EP 0 716 966 A1
WO 98/15725
EP 0 885 351 B1
EP 0 932 539 B1
US-A-3924713
verwiesen.

Um bei diesen Retardern die Verlustleistung im Nichtbremsbetrieb gering zu halten, wird im Nichtbremsbetrieb das Arbeitsmedium weitgehend aus dem Arbeitsraum des Retarders entleert. Beim Übergang zum Bremsbetrieb wird der Retarder wiederum rasch mit Arbeitsmedium befüllt. Dabei ist nachteilig, dass beim Umschalten vom Bremsbetrieb zum Nichtbremsbetrieb und vom Nichtbremsbetrieb zum Bremsbetrieb hohe Druckstöße im System auftreten, welche die einzelnen Komponenten belasten.

Der Erfindung liegt die Aufgabe zugrunde, eine Antriebseinheit mit einem füll- und entleerbaren Retarder, insbesondere Wasserretarder, speziell Sekundärwasserretarder, darzustellen, in dem Druckstöße beim Umschalten vom Bremsbetrieb zum Nichtbremsbetrieb und umgekehrt nicht auftreten oder zumindest weitgehend reduziert sind.

Diese Aufgabe wird durch eine Antriebseinheit mit den Merkmalen des Anspruchs 1 gelöst. Die abhängigen Ansprüche beschreiben besonders vorteilhafte Weiterbildungen der Erfindung.

Gemäß einer ersten Ausführung der Erfindung ist ein geschalteter Dämpfungszylinder am Kühlmittelkreislauf angeschlossen, welcher beim Umschalten vom Bremsbetrieb zum Nichtbremsbetrieb eine vorbestimmte Arbeitsmediummenge aus dem Kühlmittelkreislauf abzieht und beim Umschalten vom Nichtbremsbetrieb zum Bremsbetrieb eine vorbestimmte Arbeitsmediummenge in den Kühlmittelkreislauf abgibt. Dabei entspricht insbesondere die zugeführte Arbeitsmediummenge der zuvor abgezogenen Arbeitsmediummenge.

Gemäß einer Weiterentwicklung ist der Dämpfungszylinder gleichzeitig an zwei Stellen im Kühlmittelkreislauf derart angeschlossen, dass er automatisch arbeitet.

Gemäß einer zusätzlichen oder alternativen Ausgestaltung ist im Kühlmittelkreislauf eine Bypassstrecke mit einem geschalteten Bypass-Ventit vorgesehen, welches beim Übergang vom Bremsbetrieb zum Nichtbremsbetrieb öffnet und einen zusätzlichen Leitungsabschnitt freigibt, welcher zumindest kurzzeitig eine vorbestimmte Menge an Arbeitsmedium aufnimmt.

Erfindungsgemäß wird somit beim Umschalten vom Bremsbetrieb zum Nichtbremsbetrieb die im Fahrzeugkühlkreislauf strömende Arbeitsmediummenge um den abgezogenen Auteil vermindert, wohingegen sie beim umschalten vom Nichtbremsbetrieb zum Bremsbetrieb um den zugetührten Auteil vergrößert wird.

Die Erfindung soll nachfolgend anhand der Figuren durch Ausführungsbeispiele näher beschrieben werden.

Es zeigen:
- Figur 1: eine erste Ausführungsform der Erfindung;
- Figuren 2 und 3: eine zweite Ausführungsform der Erfindung;
- Figur 4: eine dritte Ausführungsform der Erfindung.

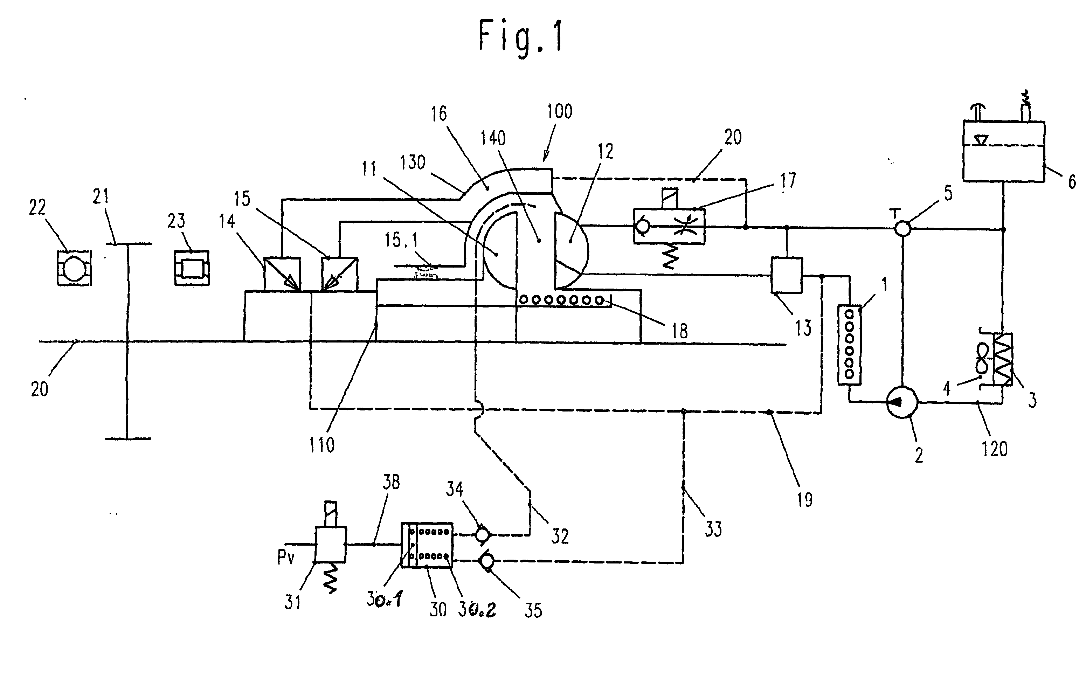

In der Figur 1 ist ein Sekundärretarder 100 gezeigt, der mit dem Kühlmedium des Fahrzeuges betrieben wird. Der in Figur 1 gezeigte Retarder zeichnet sich durch eine geringe Verlustleistung aus.

Gemäß einer ersten Maßnahme ist das Rotorschaufelrad 11 axial verschiebbar auf der Rotorwelle 110 gelagert, so dass der Rotor 11 in eine Arbeitsposition nahe zum Stator 12 oder eine Ruheposition mit großem Abstand zum Stator 12 im Nichtbremsbetrieb verbracht werden kann. In Figur 1 ist der Retarder in Ruheposition gezeigt. Bezüglich der Verschiebbarkeit des Rotors wird auf die WO 98/35171 verwiesen.

Der in Figur 1 gezeigte Retarder umfasst einen. Rotor 11, der auf einer, z. B. in einem Getriebe gelagerten schnell laufenden Welle 110, der sogenannten Retarderwelle, drehfest und fliegend gelagert ist. Die Welle 110 mit den Lagern 22 und 23 wird über ein Ritzel 21 von der - hier nicht dargestellten - Abtriebswelle eines Getriebes angetrieben. Der Rotor 11 ist auf der Welle 110 mittels einer nicht dargestellten Schrägverzahnung längsbeweglich, so dass der Abstand zwischen Rotor und Stator eingestellt werden kann. Die Feder 18 verstellt den Rotor 11 im Nichtbremsbetrieb in die verlustarme, hier dargestellte, Position, d.h. zwischen Rotor und Stator 12 ergibt sich ein größtmöglicher Spalt. Der Retarder weist ein Retardergehäuse 130 mit einem Innenraum 16 auf, wobei der Innenraum 16 mit einem Kühlmedium gefüllt werden kann und dann als Kühlmantel fungiert. Der Raum zwischen Rotor 11 und Stator 12 wird als Arbeitsraum 140 bezeichnet und ist mit Arbeitsmedium befüllt. Der hydrodynamische Retarder ist in den Kühlkreislauf 120 des Kraftfahrzeuges integriert. Damit ist in der dargestellten Ausführungsform des Retarders das Arbeitsmedium des Retarders gleichzeitig das Kühlmedium des Kraftfahrzeuges. Um die Leerlaufverluste gering zu halten, muss im Nichtbremsbetrieb der Retarder entleert werden, wobei unter Entleerung auch eine Entleerung auf eine vorgegebene Restarbeitsmediummenge zu verstehen ist, welche vorteilhaft zu einer minimalen Verlustleistung führt.

Der Entleervorgang, der weitestgehend von der Pumpwirkung des Rotors 11 erzeugt wird, wird im wesentlichen durch das Regelventil 17 gesteuert.

Um einen Druckstoß auszugleichen, welcher in den Kühlmittelkreislauf 120 dadurch eingebracht wird, dass die sich im Bremsbetrieb im Retarder befindliche Arbeitsmediummenge relativ schlagartig in den restlichen Kühlmittelkreislauf 120 entleert, ist ein Dämpfungszylinder 30 vorgesehen, welcher beim Umschalten vom Bremsbetrieb zum Nichtbremsbetrieb eine vorbestimmte Arbeitsmediummenge aufnimmt. Später, beim Umschalten vom Nichtbremsbetrieb zum Bremsbetrieb wird ein Druckstoß, welcher dadurch auftritt, dass der Retarder weitgehend schlagartig bei seiner Befüllung eine Arbeitsmediummenge aus dem restlichen Kühlmittelkreislauf 120 abzieht, dadurch ausgeglichen, dass die sich im Dämpfungszylinder 30 befindende Arbeitsmediummenge dem Kühlmittelkreislauf 120 wieder zugeführt wird.

Die Schaltung des Dämpfungszylinders 30, welcher einen Kolben 30.1 und eine Druckfeder 30.2 aufweist, wird über den Druck in der Leitung 38 geregelt. Der Druck in der Leitung 38 wird wiederum über das Ventil 31 eingestellt. Wie man sieht, ist die Leitung 38 mit der Seite des Zylinders 30 strömungsleitend verbunden, welche der Druckfederseite des Zylinders 30 entgegengesetzt ist. Somit drückt die Druckfeder 30.2 den Kolben entgegen des Druckes in der Leitung 38.

Durch die Rückschlagventile 34 und 35 in den Leitungen 32 und 33 wird erreicht, dass das Arbeitsmedium beim Umschalten vom Bremsbetrieb zum Nichtbremsbetrieb im wesentlichen aus dem Arbeitsraum 140 des Retarders oder aus einem Leitungszweig hinter dem Arbeitsraum des Retarders abgezogen wird und beim Umschalten vom Nichtbremsbetrieb zum Bremsbetrieb über die Leitung 33 der Leitung 19 zugeführt wird.

In der in der Figur 1 gezeigten Ausführungsform umfasst der hydrodynamische Retarder drei unterschiedliche Dichtungen. Eine ständig mit Kühlmittel umspülte Dichtung 14, die vorzugsweise eine Gleitringdichtung mit absoluter Dichtheit nach außen - hin zur Atmosphäre ist. Eine weitere Dichtung 15 hat in ihrer Dichtfunktion zwei Aufgaben zu erfüllen. Im Nichtbremsbetrieb wird die Kühlflüssigkeit, die über die Leitung 19 ständig den Innenraum 16 des Retardergehäuses als Kühlstrom durchfließen kann, absolut in Richtung Rotor und Stator abgedichtet, d. h. die Dichtung 15 übernimmt im Nichtbremsbetrieb die Dichtfunktion. Die Spaltringdichtung 15.1 wirkt im Bremsbetrieb als berührungsfreie Labyrinthdichtung und die Kühlflüssigkeit durchströmt die Dichtung 15, die in diesem Falle keine Dichtheit übernimmt. Damit ist gewährleistet, dass die Dichtung 14 im Bremsbetrieb auf das Druckniveau des geschlossenen Kühlsystems abgesenkt wird.

Der Innenraum 16 ist so gestaltet, dass er als wärmeabführender Kühlmantel des Retarders funktioniert, in dem das kühlere Medium über die Leitung 19 zufließt und über die Leitung 20 abfließen kann.

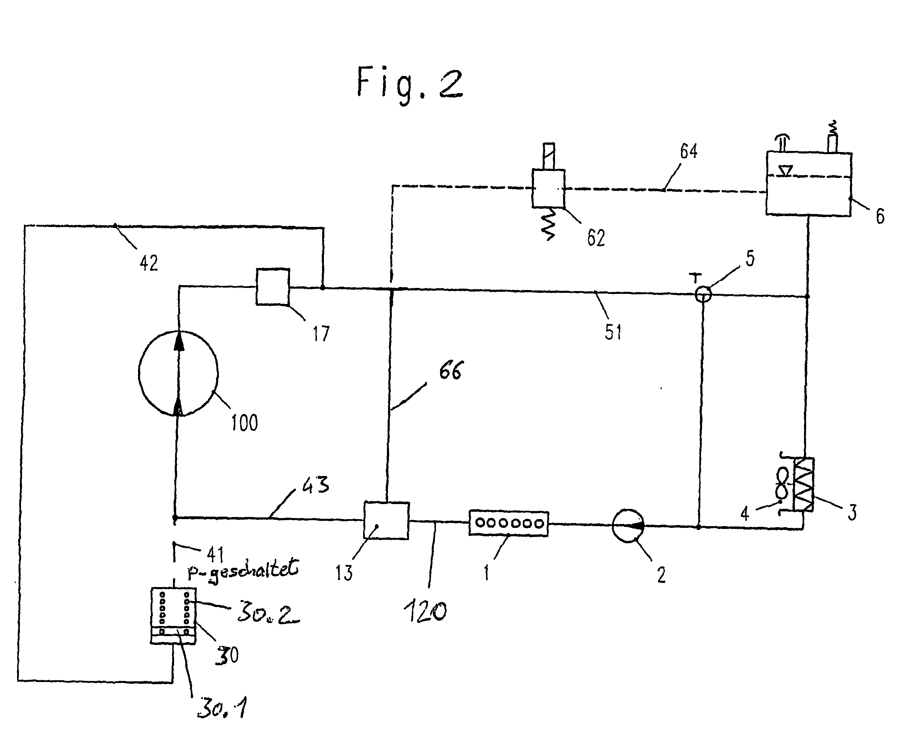

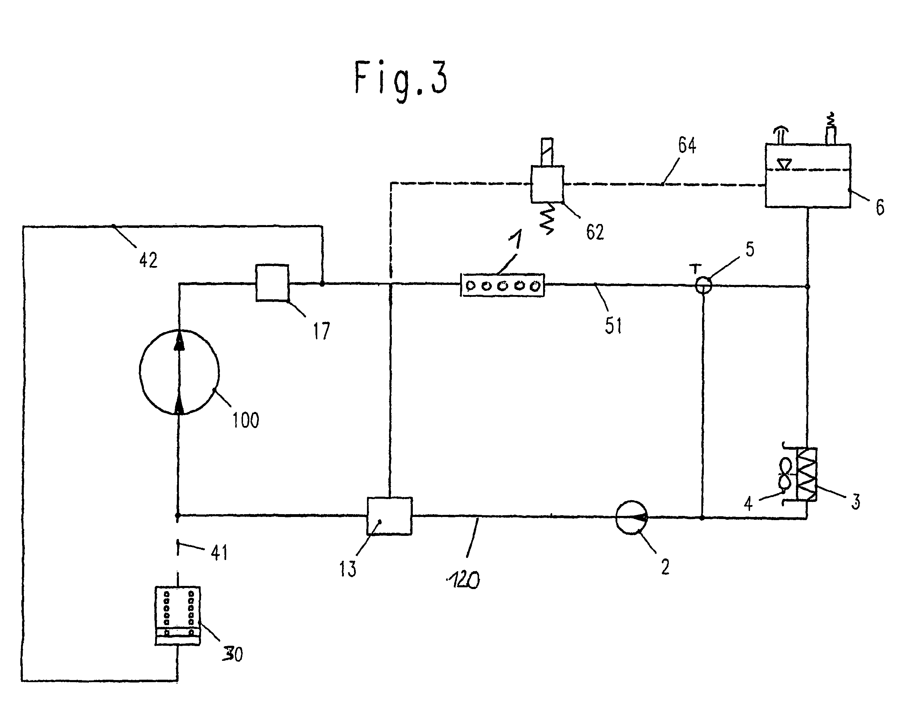

Die Figuren 2 und 3 zeigen alternative Ausgestaltungen der Erfindung, die sich dadurch auszeichnen, dass das Zuführen und Abführen des Arbeitsmediums durch den Dämpfungszylinder 30 automatisch und zwar allein in Abhängigkeit von Drücken im Kühlmittelkreislauf erfolgt. Der Dämpfungszylinder 30 ist über die Leitung 42 arbeitsmediumleitend an eine Stelle hohen Druckes hinter dem Retarder 100 und dem die Entleerung des Retarders 100 regelnden Regelventil 17 angeschlossen und über eine Leitung 41 druckleitend an eine Stelle niedrigen Druckes vor dem Retarder 100 hinter dem Umschaltventil 13. Beim Übergang vom Bremsbetrieb zum Nichtbremsbetrieb schaltet das Umschaltventil 13 die Arbeitsmediumströmung derart um, dass der Retarder 100 nicht mehr mit Arbeitsmedium über die Leitung 43 versorgt wird, sondern das gesamte Arbeitsmedium über den Bypass 66 am Leitungszweig des Kühlmittelkreislaufs mit dem Retarder 100 vorbeigeleitet wird. Dementsprechend sinkt der Druck in der Leitung 43 und damit auch in der druckverbindenden Leitung 41 ab. Der Kolben 30.1 des Dämpfungszylinders 30 wird entgegen der Druckkraft der Druckfeder 30.2 gedrückt und nimmt über die Leitung 42 Arbeitsmedium aus dem Kühlmittelkreistauf 120 auf. Somit wird der Anteil des Arbeitsmediums, welcher aus dem Retarder 100 bei seiner Entleerung abgegeben wird, durch den Dämpfungszylinder 30 "aufgefangen", ein entsprechender Druckstoß durch das Entleeren des Retarders gedämpft.

Beim anschließenden Übergang vom Nichtbremsbetrieb zum Bremsbetrieb schaltet das Umschaltventil die Arbeitsmediumströmung wieder in die Leitung 43 in Richtung des Retarders 100. Somit steigt der Druck in der Leitung 43 und damit auch in der Druckverbindung 41 zum Dämpfungszylinder 30 an. Dieser ansteigende Druck drückt zusammen mit der Druckkraft der Feder 30.2 den Kolben 30.1 des Dämpfungszylinders 30 entgegengesetzt des statischen Drucks aus der Leitung 42 und schiebt somit die im Dämpfungszylinder 30 befindliche Arbeitsmediummenge zurück in den Kühlmittelkreislauf 120. Dadurch wird zumindest teilweise der Druckabfall im Kühlmittelkreislauf 120 ausgeglichen, welcher dadurch entsteht, dass sich der Retarder 100 füllt.

Die Ausführungsform gemäß der Figur 3 entspricht im wesentlichen der Ausführungsform gemäß der Figur 2. Gleiche Bauteile sind mit gleichen Bezugsziffem wie in der Figur 2 bezeichnet. Ein Unterschied liegt in der Anordnung des Retarderkreislaufs im Kühlmittelkreislauf 120 des Fahrzeugs. Bei zugeschaltetem Retarder ist nämlich in der Figur 3 der Abzweig des Kühlmittelkreislaufs mit dem Retarder 100 zwischen der Kühlmittelpumpe 2 und dem Motor 1 eingebunden. Bei der Figur 2 hingegen war dieser Kreislaufzweig im Kühlmittelkreislauf 120 hinter dem Motor 1 eingebunden. Wie bei der Ausführungsform gemäß Figur 2 ist ein auf Durchlass umschaltbares Abstellventil 62 vorgesehen sowie eine Druckentlastungsleitung 64, die mit dem Ausgleichsbehälter 6 verbunden ist. Das Druckabstellventil 62 ist in der Druckentlastungsleitung 64 angeordnet und wird beim Auftreten hoher Druckspitzen, beispielsweise einem Impulsschlag beim Entleeren des Retarders, geöffnet. Durch diese zusätzliche Maßnahme können beim Retarderbetrieb beziehungsweise beim Umschalten vom Bremsbetrieb zum Nichtbremsbetrieb im Kühlkreislauf auftretende Druckspitzen weiter abgebaut werden. Die Druckentlastungsleitung 64 ist direkt mit dem Ausgleichsbehälter 6 verbunden.

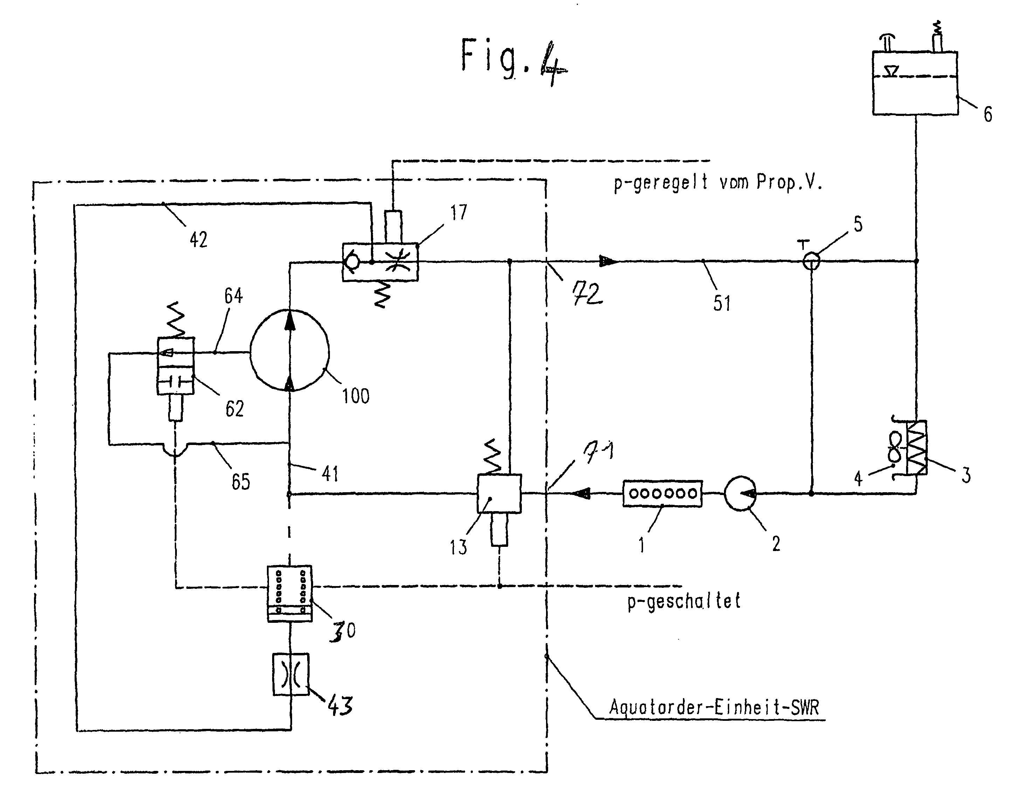

Die Figur 4 zeigt eine Weiterentwicklung der Erfindung. Das dargestellte Schaltschema zeigt Maßnahmen, die getroffen wurden, um beim Übergang vom Bremsbetrieb zum Nichtbremsbetrieb des Retarders 100 einen Druckstoß im System, insbesondere in der Leitung 51 weitgehend zu vermeiden. Ferner sind Maßnahmen dargestellt, welche zusätzlich oder alternativ ausgeführt sein können, um einen Druckstoß beziehungsweise stoßartigen Druckabfall beim Übergang vom Nichtbremsbetrieb in den Bremsbetrieb zu vermeiden.

Die erstgenannten Maßnahmen - Ausschaltstoßvermeidung - sind im wesentlichen durch das druckgeschaltete Ventil 62 mit den angeschlossenen Leitungen 64 und 65 verkörpert. Die Leitung 64 ist mit ihrem dem Ventil 62 abgewandten Ende in einer Hochdruckzone des Kühlkreislaufs angeordnet. Dies kann beispielsweise im Bereich des Arbeitsmediumauslasses des Retarders beziehungsweise an einem Entleerungskanal, welcher im Retardergehäuse ausgebildet ist, sein. Dort kann zum Beispiel zu Beginn des Nichtbremsbetriebs ein Druck von 11 bar herrschen. Eine weitere vorteilhafte Anschlussmöglichkeit ergibt sich mit der Position zwischen dem dargestellten Rückschlagventil und der einstellbaren Drossel im Regelventil 17. Dort kann beispielsweise ein Druck von 30 bar vorliegen.

Die Leitung 64 ist mit ihrem dem Ventil 62 abgewandten Ende in einer Niederdruckzone angeschlossen. Dort herrscht vorteilhaft ein Druck von maximal 2 bar. Der Anschluss kann beispielsweise im Bereich des Zulaufs des Retarders 100 vorgesehen sein, insbesondere an einem Füllkanal, der im Retarder ausgebildet ist.

Die Ansteuerung des Ventils 62 erfolgt vorteilhaft mit dem gleichen Schaltimpuls, der auch das Ventil 13 ansteuert. Beide Ventile werden insbesondere durch einen Druckstoß geschaltet (p-geschaltet). Beim Übergang vom Bremsbetrieb zum Nichtbremsbetrieb wird das Ventil 62 von einer geschlossenen Stellung in eine geöffnete Stellung geschaltet. Dadurch stellt sich eine Kurzschlussströmung über den Retarder 100 ein, das heißt Arbeitsmedium, vorliegend das Kühlmedium des Fahrzeugs, strömt aus der genannten Hochdruckzone über die Leitungen 64 und 65 in die genannte Niederdruckzone. Dadurch wird ein Ausstoß des gesamten Arbeitsmediums, welches im Bremsbetrieb durch den Retarder beziehungsweise die angeschlossenen Rohrleitungen aufgenommen war, verzögert in die Leitung 51 eingespeist, da durch die Kurzschlussströmung eine erhebliche Menge zunächst im Bereich des Retarders 100 zurückgehalten wird. Somit wird ein Druckstoß in der Leitung 51 vermieden. Der Kühlkreislaufbereich zwischen dem Ventil 13 und dem Ventil 17 über den Retarder 100 und die an diesen angeschlossenen Leitungen wird gleichmäßig entleert.

Gleichzeitig ist wie in den vorhergehenden Ausführungen ein Dämpfungszylinder 30 vorgesehen, welcher beim Umschalten vom Bremsbetrieb zum Nichtbremsbetrieb Arbeitsmedium aufnimmt und dieses wiederum beim Umschalten vom Nichtbremsbetrieb zum Bremsbetrieb abgibt. Wie man sieht, ist in diesem Ausführungsbeispiel die arbeitsmediumführende Leitung 42, welche entgegengesetzt zu der Druckfeder im Dämpfungszylinder 30 angeschlossen ist, mit einem Hochdruckbereich zwischen dem Rückschlagventil und der einstellbaren Drossel des Regelventils 17 verbunden. In die Leitung 42 ist eine Drossel 43 geschaltet, so dass beim Übergang vom Bremsbetrieb zum Nichtbremsbetrieb die abgesaugte Arbeitsmediummenge kontrolliert aus dem Kühlmittelkreislauf abgesaugt wird. Gleichzeitig wird durch diese Drossel 43 beim Übergang vom Nichtbremsbetrieb zum Bremsbetrieb die Arbeitsmediummenge des Dämpfungszylinders 30 kontrolliert in den Kühlmittelkreislauf 120 eingespeist.

Um eine optimale, das heißt möglichst geringe Verlustleistung im Nichtbremsbetrieb zu erreichen, ist vorteilhaft das Regelventil 17 derart ausgeführt, dass es im Nichtbremsbetrieb den Kühlkreislauf des Fahrzeugs (beginnend mit Leitung 51) im Nichtbremsbetrieb vollständig gegenüber dem Leitungszweig mit dem Retarder 100 abdichtet. Gleiches gilt für das Ventil 13, welches vorteilhaft ebenfalls im Nichtbremsbetrieb den Kühlkreislauf des Fahrzeugs (beginnend mit dem Leitungszweig, in welchem der Motor 1 dargestellt ist) gegenüber dem Leitungsbereich, in welchem der Retarder 100 angeordnet ist, vollständig abdichtet. Das Ventil 13 ist im Nichtbremsbetrieb zudem derart geschaltet, dass die gesamte ankommende Kühlmittelmenge über die Leitung 66 in die Leitung 51 geleitet wird.

Um einen Einschaltstoß zu vermeiden, wie oben angedeutet, kann das Ventil 13 beim Übergang vom Nichtbremsbetrieb zum Bremsbetrieb des Retarders in eine Zwischenstellung geschaltet werden, so dass zunächst nur ein Teil des Kühlmediums über die Leitung 67 zum Retarder 100 geleitet wird, während ein anderer Teil weiterhin über die Leitung 66 zur Leitung 51 geleitet wird und damit im Fahrzeugkühlkreislauf verbleibt, ohne durch den Retarder geleitet worden zu sein.

Wie in der Figur 4 ferner durch die strichpunktierte Linie angedeutet ist, können vorgegebene einzelne Bauteile zu einer Wasserretardereinheit 70 integriert werden. Diese erfindungsgemäß ausgebildete Wasserretardereinheit 70 umfasst in einer Ausführungsform den Retarder 100 und das Mittel zum Ausgleich von Druckschwankungen beim Umschalten vom Bremsbetrieb zum Nichtbremsbetrieb und umgekehrt. In einer besonderen Ausführung ist ein solches Mittel der dargestellte Dämpfungszylinder 30, insbesondere zusammen mit der Drossel 43, dem Regelventil 17 und dem Umschaltventil 13. In einer besonders vorteilhaften Ausführung umfasst die Wasserretardereinheit 70 ferner die Druckentlastungsleitungen 64 und 65 mit dem dazwischen geschalteten Druckabstellventil 62. Selbstverständlich sind vorteilhaft an der Wasserretardereinheit 70 Anschlussstellen zur Drucksteuerung beziehungsweise Druckregelung vorgesehen, zum Beispiel zur Druckschaltung des Ventils 13 und zur Druckregelung des Ventils 17. Auch die übrigen von der strichpunktierten Linie umschlossenen Leitungen sind vorteilhaft in der Wasserretardereinheit 70 integriert, so dass diese als flexibel einsetzbares Standardbauteil an einen Kühlmittelkreislauf eines Kraftfahrzeugs angeschlossen werden kann, wobei die Wasserretardereinheit 70 insbesondere mit genau einem Anschluss 71 zum Zuführen von Kühlmedium und einem einzigen Anschluss 72 zum Abführen von Kühlmedium versehen ist.

## Patentansprüche

1. Antriebseinheit eines Fahrzeugs mit einem Fahrzeugkühlkreislauf, umfassend
1.1 einen hydrodynamischen Retarder (100) mit einem Rotorschaufelrad (11) und einem Statorschaufelrad (12), wobei
1.2 der hydrodynamische Retarder (100) im Fahrzeugkühlkreislauf (120) angeordnet ist und das Arbeitsmedium des Retarders das Fahrzeugkühlmedium ist,
**dadurch gekennzeichnet, dass**
1.3 am Fahrzeugkühlkreislauf (120) Mittel zum Abziehen einer vorbestimmten Arbeitsmediummenge aus dem Fahrzeugkühlkreislauf (120) beim Umschalten vom Bremsbetrieb zum Nichtbremsbetrieb, so dass die im Fahrzeugkühlkreislauf (120) strömende Arbeitsmediummenge um diesen abgezogenen Anteil vermindert wird, und zum Zuführen einer vorbestimmten Arbeitsmediummenge in den Fahrzeugkühlkreislauf (120) beim Umschalten vom Nichtbremsbetrieb zum Bremsbetrieb, so dass die im Fahrzeugkühlkreislauf (120) strömende Arbeitsmediummenge um diesen zugeführten Anteil vergrößert wird, angeschlossen sind.

2. Antriebseinheit gemäß Anspruch 1, **dadurch gekennzeichnet, dass** als Mittel zum Abziehen und Zuführen einer vorbestimmten Arbeitsmediummenge ein geschalteter Dämpfungszylinder (30) derart am Fahrzeugkühlkreislauf (120) angeschlossen ist, dass er beim Übergang vom Bremsbetrieb zum Nichtbremsbetrieb eine vorbestimmte Menge Arbeitsmedium aus dem Fahrzeugkühlkreislauf (120) abzieht und beim Übergang vom Nichtbremsbetrieb zum Bremsbetrieb eine vorbestimmte Menge Arbeitsmedium dem Fahrzeugkühlkreislauf (120) zuführt, wobei die Schaltung gesteuert oder automatisiert erfolgt.

3. Antriebseinheit gemäß Anspruch 2, **dadurch gekennzeichnet, dass** der Dämpfungszylinder (30) einen Kolben (30.1) umfasst, dessen eine Seite druckleitend am Fahrzeugkühlkreislauf (120) vor dem Arbeitsraum (140) des Retarders (100) angeschlossen ist und welche zusätzlich durch eine Druckfeder (30.2) im Dämpfungszylinder (30) druckbeaufschlagt ist, und dessen andere Seite über eine Leitung (42) am Fahrzeugkühlkreislauf (120) hinter dem Arbeitsraum (140) des Retarders (100) angeschlossen ist.

4. Antriebseinheit gemäß einem der Ansprüche 1 bis 3, **dadurch gekennzeichnet**, eine Druckentlastungsleitung (64, 65) mit einem Druckabstellventil (62) am Fahrzeugkühlkreislauf (120) und/oder dem Retarder (100) angeschlossen ist, wobei das Druckabstellventil (62) derart gesteuert in die Druckentlastungsleitung (64, 65) eingebracht ist, dass es beim Übergang des Retarders vom Bremsbetrieb zum Nichtbremsbetrieb öffnet.

5. Antriebseinheit gemäß Anspruch 4, **dadurch gekennzeichnet, dass** die Druckentlastungsleitung (64, 65) an einem Ende an einer Stelle niedrigen Druckes in Strömungsrichtung im Bremsbetrieb vor dem Retarder (100) angeschlossen ist und mit ihrem anderen Ende an einer Stelle hohen Druckes am Retarder (100) oder hinter dem Retarder (100), wobei der Druck an der Stelle niedrigen Druckes insbesondere maximal 2 bar beträgt und der Druck an der Stelle hohen Druckes insbesondere zwischen 11 bar und 30 bar.

6. Antriebseinheit gemäß einem der Ansprüche 1 bis 5, **dadurch gekennzeichnet, dass** die Antriebseinheit einen Motor (1) und ein Getriebe aufweist und der Retarder (100) ein Sekundärretarder ist, der in Kraftflussrichtung hinter dem Getriebe angeordnet ist.

7. Antriebseinheit gemäß einem der Ansprüche 1 bis 6, **dadurch gekennzeichnet, dass** die Mittel zum Abziehen und Zuführen einer vorbestimmten Arbeitsmediummenge einen Dämpfungszylinder (30) umfassen, der einen Kolben (30.1) aufweist, der auf einer Seite durch eine Leitung (42) strömungsleitend an einer Stelle hohen Druckes an dem Fahrzeugkühlkreislauf (120) in Strömungsrichtung hinter dem Retarder (100) angeschlossen ist, und auf seiner entgegengesetzten Seite mittels einer Leitung (41) druckleitend an einer Stelle niedrigen Druckes an dem Fahrzeugkühlkreistauf (120) vor dem Retarder (100) angeschlossen ist.

8. Antriebseinheit gemäß Anspruch 7, **dadurch gekennzeichnet, dass** die Leitung (42) an ihrem dem Dämpfungszylinder (30) entgegengesetzten Ende an einem Regelventil (17) angeschlossen ist, und dass die Antriebseinheit ferner ein Umschaltventil (13) in Strömungsrichtung hinter dem Anschluss (71) zum Zuführen von Kühlmedium und vor dem Retarder (100) aufweist, das derart ausgebildet ist, dass es in vorgegebenen Schaltstellungen Kühlmedium durch den Retarder (100) oder durch einen Bypass (66) um den Retarder herum leitet, und dadurch dass das Regelventil (17), das Druckabstellventil (62) und das Umschaltventil (13) durch Druckbeaufschlagung geschaltet oder geregelt werden, wobei die Antriebseinheit mit zugeordneten Drucksteueranschlüssen versehen ist.

9. Antriebseinheit gemäß Anspruch 8, **dadurch gekennzeichnet, dass** das Umschaltventil (13) und das Regelventil (17) derart ausgebildet sind, dass sie in der vorgegebenen Schaltstellung, in welcher Kühlmedium durch den Bypass (66) um den Retarder herumgeleitet wird, in Richtung des Retarders (100) vollständig dicht.ausgeführt sind.

## Claims

1. A drive unit of a vehicle with a vehicle cooling circulation, comprising
1.1 a hydrodynamic retarder (100) with a rotor blade wheel (11) and a stator blade wheel (12), with
1.2 the hydrodynamic retarder (100) being arranged in the vehicle cooling circulation (120) and the working medium of the retarder being the vehicle cooling medium,
**characterized in that**
1.3 means are connected to the vehicle cooling circulation (120) for withdrawing a predetermined quantity of working medium from the vehicle cooling circulation (120) during the transition from braking operation to non-braking operation, so that the quantity of working medium flowing in the vehicle cooling circulation (120) is reduced by this withdrawn quantity, and for supplying a predetermined quantity of working medium to the vehicle cooling circulation (120) during the transition from non-braking operation to braking operation, so that the quantity of working medium flowing in the vehicle cooling circulation (120) is increased by the supplied portion.

2. A drive unit according to claim 1, **characterized in that** a switched damping cylinder (30) is connected to the vehicle cooling circulation (120) as a means for withdrawing and supplying a predetermined quantity of working medium in such a way that during the transition from braking operation to non-braking operation it withdraws a predetermined quantity of working medium from the vehicle cooling circulation (120) and supplies a predetermined quantity of working medium to the vehicle cooling circulation (120) during the transition from non-braking operation to braking operation, with the switching occurring in a controlled or automated manner.

3. A drive unit according to claim 2, **characterized in that** the damping cylinder (30) comprises a piston (30.1) whose one side is connected in a pressure-conducting manner to the vehicle cooling circulation (120) before the working chamber (140) of the retarder (100) and which is additionally pressurized by a pressure spring (30.2) in the damping cylinder (30), and whose other side is connected via a line (42) to the vehicle cooling circulation (120) behind the working room (140) of the retarder (100).

4. A drive unit according to one of the claims 1 to 3, **characterized in that** a pressure relief line (64, 65) with a pressure cut-off valve (62) is connected to the vehicle cooling circulation (120) and/or the retarder (100), with the pressure cut-off valve (62) being introduced in a controlled manner into the pressure relief line (64, 65) in such a way that it opens during the transition of the retarder from braking operation to non-braking operation.

5. A drive unit according to claim 4, **characterized in that** the pressure relief line (64, 65) is connected at one end at a point of low pressure in the direction of flow in the braking operation before the retarder (100) and with its other end at a point of high pressure to the retarder (100) or behind the retarder (100), with the pressure at the point of low pressure being especially a maximum of 2 bars and the pressure at the point of high pressure being especially between 11 bars and 30 bars.

6. A drive unit according to one of the claims 1 to 5, **characterized in that** the drive unit comprises an engine (1) and a transmission and the retarder (100) is a secondary retarder which is arranged behind the transmission in the direction of the force flow.

7. A drive unit according to one of the claims 1 to 6, **characterized in that** the means for withdrawing and supplying a predetermined quantity of working medium comprise a damping cylinder (30) comprising a piston (30.1) which is connected at one side by a line (42) in a flow-conducting manner at a point of high pressure to the vehicle cooling circulation (120) in the direction of flow behind the retarder (100), and is connected on its opposite side by means of a line (41) in a pressure-conducting manner at a point of low pressure to the vehicle cooling circulation (120) before the retarder (100).

8. A drive unit according to claim 7, **characterized in that** the line (42) is connected at its end opposite of the damping cylinder (30) to a control valve (17), and that the drive unit further comprises a reversing valve (13) in the flow direction behind the connection (71) for supplying medium and before the retarder (100) which is configured in such a way that in predetermined switching positions it guides cooling medium through the retarder (100) or through a bypass (66) around the retarder, and **in that** the control valve (17), the pressure cut-off valve (62) and the reversing valve (13) are switched or controlled by pressurization, with the drive unit being provided with associated pressure control connections.

9. A drive unit according to claim 8, **characterized in that** the reversing valve (13) and the control valve (17) are configured in such a way that they are provided in the direction of the retarder (100) with a completely leakproof configuration in the predetermined switching position in which cooling medium is guided through the bypass (66) around the retarder.

## Revendications

1. Groupe moteur d'un véhicule avec un circuit de refroidissement de véhicule comprenant
1.1 un ralentisseur hydrodynamique (100) avec une roue à pales (11) de rotor et une roue à pales (12) de stator,
1.2 le ralentisseur hydrodynamique (100) étant disposé dans le circuit de refroidissement (120) du véhicule et le fluide de travail du ralentisseur étant le fluide caloporteur du véhicule,
**caractérisé en ce que**
1.3 des moyens pour prélever une quantité prédéterminée de fluide de travail du circuit de refroidissement (120) du véhicule lors du passage du mode freinage au mode non-freinage de sorte que la quantité de fluide de travail circulant dans le circuit de refroidissement (120) du véhicule est diminuée de cette fraction prélevée et pour fournir au circuit de refroidissement (120) du véhicule une quantité prédéterminée de fluide de travail lors du passage du mode non-freinage au mode freinage de sorte que la quantité de fluide de travail circulant dans le circuit de refroidissement (120) du véhicule est augmentée de cette fraction rajoutée sont prévus sur le circuit de refroidissement (120) du véhicule.

2. Groupe moteur selon la revendication 1, **caractérisé en ce qu'**un cylindre amortisseur (30) commutable faisant office de moyen pour prélever et pour fournir une quantité prédéterminée de fluide de travail est branché sur le circuit de refroidissement (120) du véhicule de telle sorte qu'il prélève du circuit de refroidissement (120) du véhicule une quantité prédéterminée de fluide de travail lors du passage du mode freinage au mode non-freinage et qu'il fournit au circuit de refroidissement (120) du véhicule une quantité prédéterminée de fluide de travail lors du passage du mode non-freinage au mode freinage, la commutation étant commandée ou automatisée.

3. Groupe moteur selon la revendication 2, **caractérisé en ce que** le cylindre amortisseur (30) comprend un piston (30.1) dont un côté est branché sur le circuit de refroidissement (120) du véhicule en amont de l'enceinte de travail (140) du ralentisseur (100) de façon à conduire la pression et est en outre soumis à une pression par un ressort de compression (30.2) dans le cylindre amortisseur (30) et dont l'autre côté est branché sur le circuit de refroidissement (120) du véhicule en aval de l'enceinte de travail (140) du ralentisseur (100) par l'intermédiaire d'une conduite (42).

4. Groupe moteur selon l'une quelconque des revendications 1 à 3, **caractérisé en ce qu'**une conduite de décharge de pression (64, 65) avec une vanne d'arrêt (62) est branchée sur le circuit de refroidissement (120) du véhicule et/ou sur le ralentisseur (100), la vanne d'arrêt (62) installée dans la conduite de décharge de pression (64, 65) étant commandée de manière à s'ouvrir lors du passage du ralentisseur du mode freinage au mode non-freinage.

5. Groupe moteur selon la revendication 4, **caractérisé en ce que**, à une extrémité, la conduite de décharge de pression (64, 65) est branchée en mode freinage en amont du ralentisseur (100) dans le sens d'écoulement à un endroit de basse pression et à son autre extrémité sur le ralentisseur (100) ou derrière le ralentisseur (100) à un endroit de pression élevée, la pression à l'endroit de basse pression ne dépassant notamment pas les 2 bar et la pression à l'endroit de pression élevée étant comprise entre 11 bar et 30 bar.

6. Groupe moteur selon l'une quelconque des revendications 1 à 5, **caractérisé en ce que** le groupe moteur comporte un moteur (1) et un engrenage et que le ralentisseur (100) est un ralentisseur secondaire qui est disposé en aval de l'engrenage dans le sens des efforts exercés.

7. Groupe moteur selon l'une quelconque des revendications 1 à 6, **caractérisé en ce que** les moyens destinés à prélever et à fournir une quantité prédéterminée de fluide de travail comprennent un cylindre amortisseur (30) comportant un piston (30.1) qui est branché par l'intermédiaire d'une conduite (42) d'un côté à un endroit de pression élevée sur le circuit de refroidissement (120) du véhicule en aval du ralentisseur (100) dans le sens d'écoulement de façon à conduire la pression et est branché sur son côté opposé par l'intermédiaire d'une conduite (41) à un endroit de pression basse sur le circuit de refroidissement (120) du véhicule en amont du ralentisseur (100).

8. Groupe moteur selon la revendication 7, **caractérisé en ce que** la conduite (42) est branchée à son extrémité opposée au cylindre amortisseur (30) sur une valve de réglage (17) et que le groupe moteur comporte par ailleurs, en aval du raccord (71) pour alimenter le circuit en fluide caloporteur et en amont du ralentisseur (100) dans le sens d'écoulement, une soupape de commutation (13) conformée de telle sorte que, dans des positions de commutation imposées, elle autorise le passage de fluide caloporteur au travers du ralentisseur (100) ou qu'elle le fasse contourner le ralentisseur en lui faisant emprunter un by-pass (66) et que la valve de réglage (17), la vanne d'arrêt (62) et la soupape de commutation (13) sont commutées ou réglées en les soumettant à une pression, le groupe moteur étant muni de raccords de commande de la pression associés.

9. Groupe moteur selon la revendication 8, **caractérisé en ce que** la soupape de commutation (13) et la valve de réglage (17) sont conformées de manière à être totalement étanches en direction du ralentisseur (100) dans la position de commutation imposée dans laquelle le fluide caloporteur est contraint de contourner le ralentisseur en empruntant le by-pass (66).
